# EUROPEAN PATENT APPLICATION

(11) **EP 1 712 133 A2**
(43) Date of publication of application: **18.10.2006**
(21) Application number: 06075819.0
(22) Date of filing: 05.04.2006
(51) Int. Cl.: A21C 11/00

(54) **Device for the forming of pastry bases, in particular for pies of cheesecake type**

(30) Priority: 11.04.2005 IT PD20050095
(71) Applicant: COMAS S.p.A., 36030 Pievebelvicino (IT)
(72) Inventor: Visona, Stefano, 36015 Schio (Vicenza) (IT)
(74) Representative: Gallo, Luca

(57) **Abstract**

Device for the forming of pastry bases (5'), in particular for pies of cheesecake type, which comprises a support base (7) for at least one circular pan (2) adapted to contain a quantity of dough (5) to distribute at its interior, an operating head (8) which is moveable between a raised position and a lowered position and is provided with a roller (12) for distributing the dough (5). Such roller (12) with the head (8) in lowered position is arranged at a predefined height (4) and distance (5) respectively from the bottom (3) and inner side (4) of the pan (2) to define the height and thickness of the pastry base (5'). The roller (12) is equipped with a rotation motion around its own axis (Y') and a related revolution motion around an axis (Y) parallel to the rotation axis, orthogonal to the bottom (3) of the pan (2) and passing through the centre of the latter.

## Description

### Field of Application

The present invention concerns a device for the forming of pastry bases, in particular for cheesecake type pies.

The referred device is intended to be advantageously employed in the automatic production lines of pies and the like to obtain a correct distribution of the pastry in the pans forming the base for containing the subsequent ingredients.

The device, object of the present invention, is indicated for obtaining pastry bases with any type of dough; nevertheless it is particularly recommended for obtaining pastry bases for so-called cheesecake pies, which as known are particularly crumbly, not very elastic.

### State of the Art

As is known, the industrial lines for the automatic production of pies generally comprise an extrusion and loading station of pastry portions at the centre of the pans (or cooking moulds), a station of pressing for the forming of pastry bases inside the pans, one or more metering stations of filling and/or garnishing, and an automatic unloading station.

As is known in the pressing station, a device is employed for the forming of pastry bases comprising a press equipped with a disc, which compressing the pastry contained in the pans determines its nearly uniform distribution inside it and on the edges of the same pan. Preferably, the press elastically supports a metallic ring around the compression disc, which is intended to abut against and be sealed on the upper edge of the pan, to define the containment surface of the pastry edge.

As is known, the ingredients employed for the production of the pies may vary in relation with the desert which one intends to produce, and therefore may lead to doughs with different characteristics in terms of elasticity, softness, friability etc.

For example, the pies commonly called "cheesecakes", particularly appreciated in Anglo-Saxon countries, foresee a particularly crumbly and little elastic dough, due to the presence of a considerable quantity of crumbled cookies in the ingredients.

Such doughs are not suitable to be formed by means of a device of the type described above, since the dough following the compression of the press is not capable of reaching all of the pan areas, and in particular is not able to be uniformly distributed on the lateral edge of the pan.

Therefore, presently with particularly crumbly doughs, one must necessarily recur to the manual work of an operator, who with suitable instruments and rotating rollers seeks to distribute the pastry over the entire available surface of the pan.

Obviously, such manual solution, in addition to not ensuring a consistent qualitative standard in the distribution of the dough on the pan, does not permit a complete automation of the production line and therefore damages the production yield of the pies.

In order to overcome such drawbacks, devices were studied for the forming of doughs in grids, provided with a forming head which to the compression action of the presses also associates a distribution action of the dough. US patent 3,659,828 describes a forming head, which is supported at the end of a transmission shaft connected to the drive shaft at a slant.

Operatively, the forming head rotating inside the pan presses the pastry and moves it from the central zone towards the outer edge of the pan, due to its slant with respect to the horizontal plane of the pan.

Even such solutions, however, have been found to be substantially unfit for distributing particularly crumbly doughs, such as that of the cheesecake, not being able to uniformly apportion the dough over the entire height of the pan edges.

### Presentation of the Invention

In this situation, the problem underlying the present invention is therefore that of overcoming the drawbacks of the solutions of known type mentioned above, making available a device for the forming of pastry bases, in particular for cheesecake pies, which permits reaching an optimal distribution of the dough over the entire available surface of the pans.

Another object of the present finding is to make a device for the forming of pastry bases which is structurally simple and entirely reliable.

A further object of the present finding is to make a device for the forming of pastry bases which is particularly safe hygienically, protecting the pastry base during the forming.

### Brief Description of the Drawings

The technical characteristics of the finding, according to the aforesaid objects, are clearly verifiable in the contents of the below stated claims, and the advantages of the same will be more clearly evident from the detailed description which follows, made with reference to the attached drawings, which represent one of its merely exemplifying and not limiting embodiments, wherein:
**FIG. 1** shows an overall view of an automatic production line of pies, with the device prearranged for the forming of pastry bases, object of the present invention;
**FIGS. 2 and 3** show two vertical section views of the device, object of the present invention, carried out with an operating head of the device respectively in raised position with respect to the dough, and in lowered position on the dough.

### Detailed Description of a Preferred Embodiment

With reference to the drawings, an automatic production line of pies and the like is indicated with A, and the device for the forming of pastry bases, object of the present finding, is indicated with 1.

Unlike the presses of known type, the device 1 object of the present invention is capable of uniformly extending a pastry base over the entire available surface of a pan 2, or rather both on the bottom 3 and on the inner side 4 of the pan 2, and up to a predetermined height H, also with particularly crumbly doughs such as those normally required for making pies commonly called of cheesecake type.

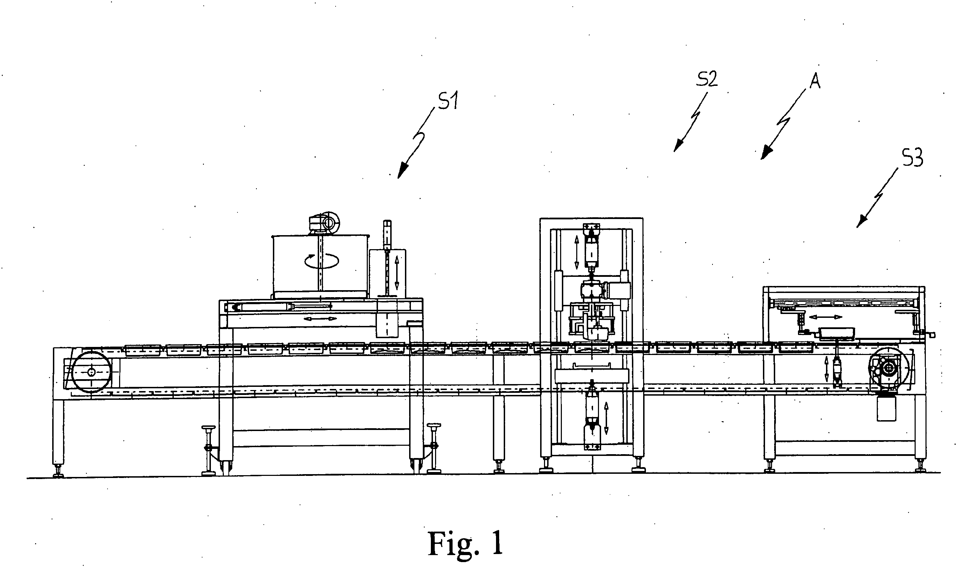

The device 1 lends itself to be employed both on its own and inside a production line A as indicated in figure 1, comprising for example an extrusion station S of dough portions 5 at the centre of the pans 2, a forming station S2 of the pastry bases 5' inside the pans 4, and an automatic unloading station S3.

Obviously, other automatic stations may be foreseen inside the line 1, as for example an initial automatic loading station of the pans and one or more metering stations of filling and/or garnishing arranged downstream of the forming station S2.

With reference to the attached figures, the device 1 of the forming station S3 comprises a support structure 6, which may be the same of the entire automatic line A, provided with a plurality of support bases 7 for supporting the circular pans 2.

Each support base 7 is advantageously composed of a seat wherein the bottom of the pan 2 is at least partially inserted; the seat is mechanically associated with a conveyor belt adapted to bring the pans 2 through the stations of the automatic production line A.

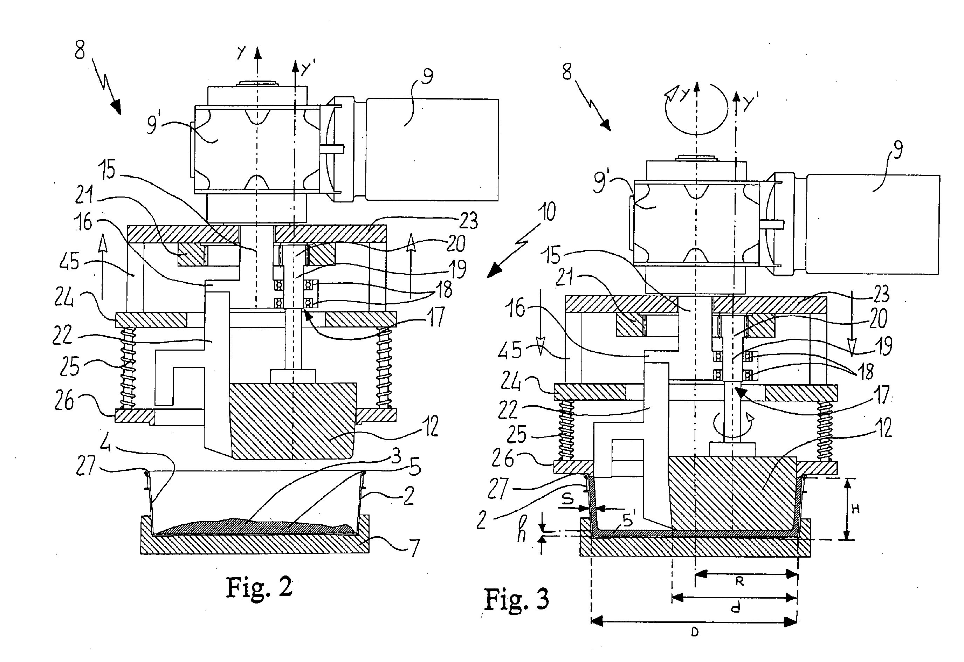

An operating head 8 is mechanically connected to the support structure 6 by means of actuator means 9 adapted to move it between a raised position 10 (see figure 2) and a lowered position 11 (see figure 3).

In the raised position 10, the operating head 8 is arranged in a distal position with respect to the pan 2, which passes through the forming station S3 thus to permit the same pan 2 to be inserted below the head 8, or rather for permitting the head 2 to continue towards another station once the dough 5 has been distributed and the pastry base 5' has been formed.

In the lowered position 11, the operating head 8 is active on the dough 5 contained in the underlying pan 2 to distribute it over the bottom 3 and inner side 4 as will be explained below.

More in detail, the operating head 8 is provided with a roller 12 for distributing the dough 5, which when the operating head 8 is in lowered position 11, is arranged at a predefined height h from the bottom 3 of the pan 2, close to the inner side 4 of the pan itself and a predefined distance S from the latter.

The roller 12 distributes the dough 5 by moving it from the centre of the pan 2 over the entire bottom 3 and along the inner surface of the side 4 through a rotational motion around its rotation axis Y oriented orthogonally to the bottom 3 of the pan 2, and a related revolution motion around a revolution axis Y' parallel to the rotation axis Y of the roller 12 and passing orthogonally through the centre of the pan 2.

Such movements of the roller 12 with respect to the pan 2 are obtained through motorisation means which will be described in detail below.

In particular, the axial rotation of the roller 12 causes a radial movement of the dough from the centre towards the inner side 4 of the pan 2.

For this purpose, the diameter d of the roller 12 is greater than the radius R of the pan 2 and less than the diameter D of the pan 2, as shown in figure 3.

The revolution movement of the roller 12 around the centre of the pan 2 permits the distribution of the dough on the inner side 4 of the same pan 2.

The motorisation means mentioned above comprise, in accordance with a preferential embodiment of the present invention illustrated in the attached figures, a first motor 13 fixed to a framework 14 of the head 8, on which the actuator means 9 operate for moving the latter between the two raised and lowered positions 10 and 11.

The first motor 9 bears a gear motor 9' mechanically connected at its end, which controls the motion of a first shaft 15 whose axis coincides with the revolution axis Y' of the roller 12 around the axis Y' passing through the centre of the pan 2.

The first shaft 15 bears a disc 16 fixed at its free end, which is provided with a hole 17 within which a second shaft 19 is eccentrically mounted by means of two bearings 18. This last is free to rotate around its own axis, which coincides with the rotation axis Y of the roller 12.

Therefore, the revolution movement of the roller 12 around the axis Y' is caused by the rotation of the first shaft 15 around its own axis Y', which brings the second shaft 19 into rotation by means of the disc 16.

The second shaft 19, on which the roller 12 is axially fixed, is provided at one of its upper ends with a first gear wheel 20, which is engaged with a second gear wheel 21 fixed by means of screws to the framework 14 of the head 8.

Since the framework 14 and therefore the second gear wheel 21 do not rotate, subjecting the roller 12 to a rotation around the revolution axis Y', a rotation of the roller 12 is by necessity caused around its rotation axis Y, controlled by the engagement of the two gear wheels 20 and 21.

In accordance with a variant embodiment of the present invention, not illustrated in the attached figures, the motorisation means may diversely comprise a first motor fixed to the framework of the head 8, which directly brings into rotation the support shaft of the roller 12 around its own rotation axis Y', and a second motor fixed to the load-bearing structure 6, which brings into rotation the support base of the pan 2 around its central axis Y.

The solution described and illustrated above must nevertheless be considered surprisingly advantageous with respect to the latter mentioned above since it permits a much simplified mechanical construction of the device and does not require the use of distinct motors.

In order to obtain an optimal distribution, the peripheral speed of the roller 12 will be advantageously such to have no related sliding with respect to the lateral surface of the inner side of the pan 2, and for such purpose the diameters of the two gear wheels 20 and 21 will be conveniently chosen.

In accordance with an advantageous characteristic of the present invention, a scraping knife 22 is foreseen, supported by the disc 16 and fixed to the first shaft 15 in proximity to the lateral surface of the roller 12, for removing the dough 5 which has attached in particular on the inner wall 4 during its distribution action.

Preferably, the second gear wheel 21 is obtained with a crown bearing the toothing inside and fixed on the upper part to a first horizontal plate 23 of the framework 14, with a first opening made centrally for the passage of the first shaft 15.

The framework 14 moreover comprises a second plate 24 hung on the first by means of columns 45 and provided with a second opening for the passage of the second shaft 16 as well as scraping knife 22, both mechanically connected to the first shaft 15.

The second plate 24 in turn supports, by means of springs 25, a circular crown 26 which is susceptible to elastically abut against the upper edge 27 of the pan 2 during the movement of the head from the raised position 10 to the lowered position 11.

More in detail, the crown 26 has at its inner profile an annular appendage 28 projecting downward towards the pan 2, which is arranged, when the head 8 is in the lowered position 11, below the upper edge 27 of the pan 2 and between the outer surface of the roller 12 and the inner side 4 of the pan 2.

In this manner, the appendage 28 defines the height of the lateral wall H of the pastry base 5' with the portion projecting from the upper edge 27 towards the bottom 3 of the pan 2, while it defines the thickness of the pastry base with the portion radially projecting towards the centre of the pan 2.

The finding thus conceived therefore achieves the predetermined objects.

Obviously, it may also assume shapes and configurations in its practical manufacture which are different from that illustrated above, without for this departing from the present protective scope.

Moreover, all details may be substituted by elements which are technically equivalent, and the size, shapes and materials employed may be of any type according to need.

## Claims

1. Device for the forming of pastry bases, in particular for pies of cheesecake type, **characterised in that** it comprises:
- a support structure provided with a support base for at least one circular pan, intended to contain a quantity of dough to distribute inside it to form said pastry base;
- a mechanically operating head connected to said support structure by means of actuator means adapted to move it between a raised position, wherein the operating head is arranged in a distal position with respect to said pan, and a lowered position, wherein the operating head is active on the dough contained in said pan; said operating head being provided with at least one roller for distributing the dough, which with the operating head in lowered position, is arranged at a predefined height from the bottom of the pan, close to the inner side of the pan and at a predefined distance from the latter; said roller being equipped with a rotation motion around its own rotation axis oriented orthogonally to the bottom of said pan, and a related revolution motion around a revolution axis parallel to said rotation axis, orthogonal to the bottom of said pan and passing through the centre of the latter; motorisation means being provided to confer to said roller said rotation motion and said related revolution motion.

2. Device according to claim 1, **characterised in that** the diameter of said roller is greater than the radius of said pan and less than the diameter of said pan.

3. Device according to claim 1, **characterised in that** said motorisation means comprise a first motor fixed to a framework of said head, susceptible to bringing into rotation a first shaft with axis coinciding with said revolution axis of said roller and eccentrically supporting a second shaft, free to rotate around its own axis which coincides with the rotation axis of said roller.

4. Device according to claim 3, **characterised in that** said second shaft coaxially bears fixed a first gear wheel, engaging with a second gear wheel fixed at the framework of said operating head, the rotation of said roller around said revolution axis controlled by said first shaft, causing a rotation of said same roller also around its own rotation axis due to the engagement between said two gear wheels.

5. Device according to claims 1 or 2, **characterised in that** said motorisation means comprise a first motor fixed to a framework of said head, susceptible to bringing into rotation the support shaft of said roller around its rotation axis, and a second motor fixed to said load-bearing structure susceptible to bringing into rotation said support base of said pan around its central axis.

6. Device according to claim 3, **characterised in that** it comprises a scraping knife supported by said first shaft in proximity with the lateral surface of said roller so to remove the dough therefrom.

7. Device according to claim 3, **characterised in that** it comprises a circular crown, elastically supported by said framework and susceptible to elastically abut against the upper edge of said pan during the movement of said head from said raised position to said lowered position.

8. Device according to claim 7, **characterised in that** said circular crown is provided at its inner profile with an annular appendage, projecting inside said pan and interposed, with said head in lowered position, between the outer surface of said roller and the inner side of said pan 2.

9. Device according to claim 8, **characterised in that** the inner profile of said crown rests on the lateral surface of said roller.
